Europäisches Patentamt

European Patent Office

Office européen des brevets

(19)

(11) Numéro de publication: **0 046 566**
**B1**

(12) **FASCICULE DE BREVET EUROPEEN**

(45) Date de publication du fascicule du brevet:
27.03.85

(51) Int. Cl.⁴: **B 60 K 11/04**

(21) Numéro de dépôt: **81106406.2**

(22) Date de dépôt: **18.08.81**

(54) **Dispositif de fixation rapide d'un radiateur de refroidissement moteur, formé d'un ensemble à ressort.**

(30) Priorité: **22.08.80 FR 8018384**

(43) Date de publication de la demande:
**03.03.82 Bulletin 82/9**

(45) Mention de la délivrance du brevet:
**27.03.85 Bulletin 85/13**

(84) Etats contractants désignés:
**BE DE GB IT NL SE**

(56) Documents cités:
**DE - A - 2 634 990**
**FR - A - 2 089 616**
**FR - A - 2 336 268**
**US - A - 3 333 810**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Thepault, Yves, 2, rue de la Division Leclerc,
F-78140 Velizy (FR)**

(74) Mandataire: **Casalonga, Axel et al, BUREAU D.A.
CASALONGA OFFICE JOSSE & PETIT
Baaderstrasse 12-14, D-8000 München 5 (DE)**

BUNDESDRUCKEREI BERLIN

## Description

La présente invention se rapporte à un dispositif de positionnement et de maintien d'un radiateur de refroidissement moteur d'un véhicule automobile sur les poutres métalliques du compartiment moteur, selon un arrangement tel que défini dans le préambule de la revendication 1.

Le plus souvent, dans les arrangements de ce type, le radiateur est positionné et prend appui sur une poutre inférieure, par l'intermédiaire de pions de centrage et de tampons élastiques, puis il est fixé sur une poutre supérieure, décalée transversalement de la poutre inférieure, au moyen d'une pièce de liaison boulonnée sur la poutre supérieure et prenant appui au sommet du radiateur, avec interposition d'un autre tampon élastique, en exerçant une pression verticale suffisante sur le radiateur pour assurer son maintien efficace.

Mais ce montage est long et malcommode du fait de la nécessité de maintenir le radiateur sous pression pendant le boulonnage de la pièce de fixation. De plus, il est nécessaire de régler la position de la pièce de liaison, par exemple au moyen de boutonnières et de cales, pour rattraper les nombreuses dispersions de cotes dues à la fabrication aussi bien du radiateur que de son environnement.

Le réglage est d'autant plus difficile, voire même inutile, que la poutre supérieure est moins rigide. En effet, la pression exercée sur le radiateur risque d'être absorbée par une torsion correspondante de la poutre.

Une autre solution consiste à fixer le radiateur sur la poutre inférieure, après l'avoir positionné par rapport à la poutre supérieure. Mais cette fois l'accessibilité est plus difficile et le boulonnage et le réglage encore plus longs.

Le but de l'invention est de pallier les inconvénients précédents en proposant un dispositif de positionnement rapide et de maintien sous pression d'un radiateur par rapport à une structure de poutres environnantes entre lesquelles le radiateur doit être maintenue d'une part à sa base en prenant appui sur une poutre inférieure et d'autre part à son sommet par rapport à une poutre supérieure décalée transversalement de la poutre inférieure, sachant que la poutre supérieure ne peut être utilisée pour encaisser le couple de torsion transmis par l'organe de fixation.

Un autre but de l'invention est de proposer un dispositif à montage rapide, sans visserie, capable d'absorber automatiquement les différentes dispersions de fabrication.

Ces buts sont atteints grâce aux moyens définis dans la partie caractérisante de la revendication 1.

Le ressort comporte une branche à fixation élastique rapide sur la poutre intermédiaire et une branche élastique à peu près perpendiculaire à la première et reliée à celle-ci par une branche de ressort assurant la compression sur la pièce à maintenir.

La branche de fixation ne fait que traverser la poutre supérieure sans la soumettre à aucune torsion si bien que les efforts sont encaissés par la poutre intermédiaire plus rigide, servant d'appui.

La description qui suit d'un mode de réalisation de l'invention fait référence au dessin annexé sur lequel:

— la figure 1 est une vue en coupe du dispositif appliqué au maintien d'un radiateur de véhicule,

— la figure 2 représente en perspective, l'ensemble à ressort utilisé.

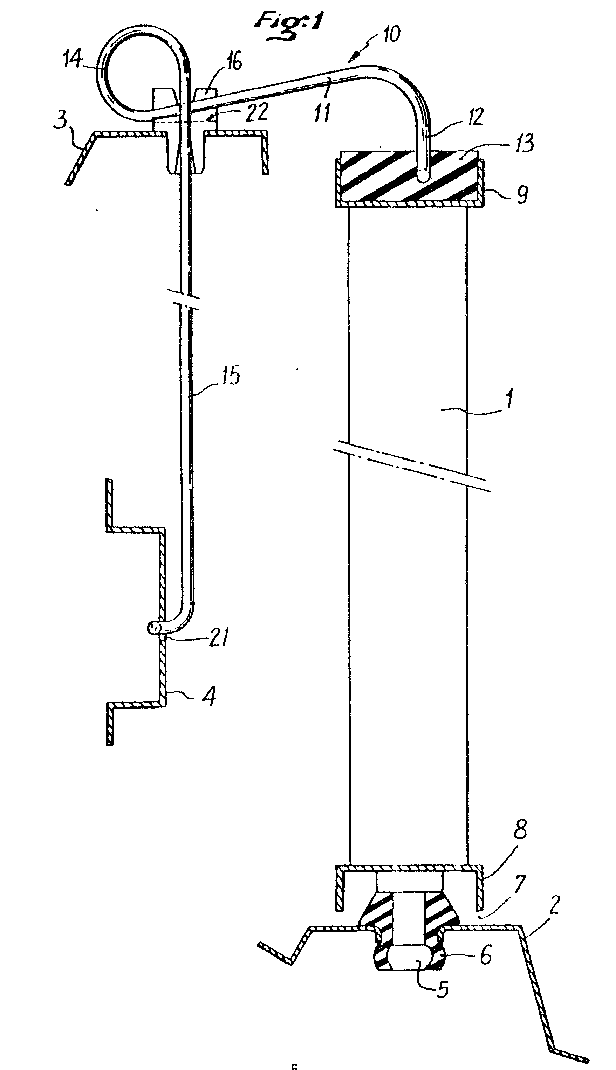

On reconnait sur la figure 1 un radiateur 1 de refroissement moteur de véhicule automobile devant être monté à l'intérieur du compartiment moteur et entouré de traverses ou de poutres métalliques environnantes telles qu'une poutre inférieure 2, une poutre supérieure 3 décalée transversalement de la première et une poutre intermédiaire 4 située verticalement entre les deux autres, au niveau de la calandre non représentée.

Le radiateur 1 repose de façon connue sur la poutre inférieure 2 par l'intermédiaire de pions 5 clipsés dans ladite poutre avec interposition d'un tampon élastique 6 en caoutchouc formant butée, de manière à laisser un jeu 7 entre la base 8 du radiateur et la poutre. Ce système permet de positionner et de fixer rapidement le radiateur sur la poutre la moins accessible au montage.

Conformément à l'invention, le sommet 9 du radiateur est maintenu verticalement sous pression au moyen d'un ensemble 10 à ressort en fil comprenant une branche 11 de retenue élastique terminé en forme de crochet 12 et venant appuyer sur le sommet 9 du radiateur avec interposition d'un tampon élastique 13, une boucle 14 de ressort, même incomplète, et une branche 15 de fixation sensiblement à l'équerre avec la branche 11 de retenue, traversant librement la poutre supérieure 3 en étant guidée par une agrafe 16 et accrochée sur la poutre intermédiaire 4 située sous la poutre supérieure, à la verticale du trou de l'agrafe pour le passage de la branche de fixation.

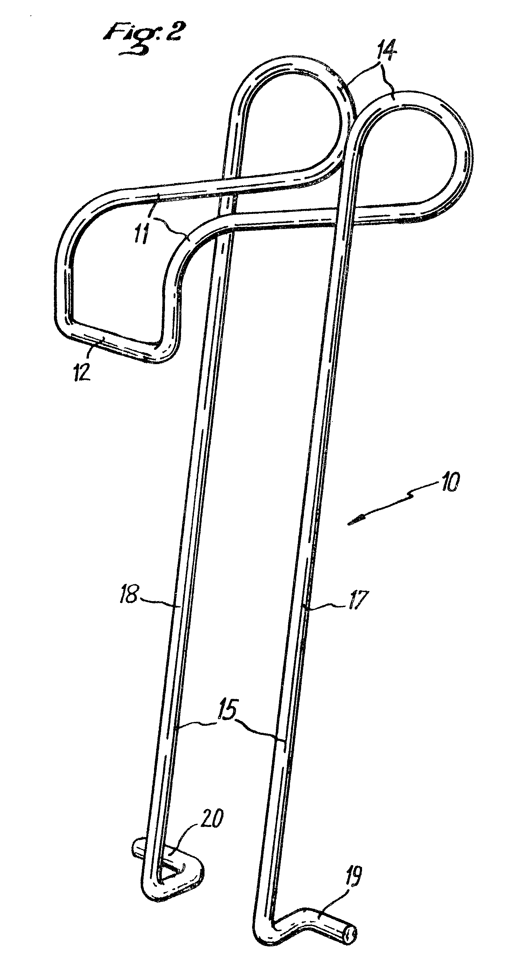

La figure 2 illustre la conformation de l'ensemble 10 à ressort monopièce constitué d'un fil aller 17 et d'un fil retour 18, parallèle à l'aller. Les extrémités libres de l'ensemble forment l'extrémité de la branche de fixation 15, manipulée comme une barrette élastique, par rapprochement des deux brins dont les bouts 19, 20 sont coudés successivement dans deux plans perpendiculaires pour former des organes d'accrochage dans une lumière 21 de la poutre intermédiaire 4 et d'appui sur l'épaisseur de cette lumière.

Le crochet 12 de la branche de retenue transmettant, pour la compression du radiateur, l'élasticité de la boucle 14 de ressort, forme la jonction entre le fil aller 17 et le fil retour 18, l'écartement constant entre les deux brins étant déterminé par la largeur du crochet 12 et étant maintenu par l'agrafe 16 de guidage au cours du passage à travers la poutre supérieure 3.

L'agrafe peut être prémontée sur l'ensemble à ressort puis clipsée dans l'ouverture appropriée de la poutre 3. Elle présente des rainures supérieures 22 sur lesquelles s'appuient les boucles 14 du ressort et les brins 11 de la branche de retenue, encaissant et transmettant l'effort de compression vers la branche de fixation 15 en supprimant le moment de torsion dans la poutre supérieure et en n'y laissant subsister qu'un effort tranchant dans le sens de sa plus grande inertie. La poutre intermédiaire 4 supporte alors tous les efforts importants.

Par ailleurs, l'élasticité de la branche de retenue 11 permet de monter rapidement le radiateur 1 et d'absorber les dispersions de fabrication tout en exerçant un effort vertical suffisant sur le radiateur.

**Revendications**

1. Dispositif de maintien d'un radiateur de refroidissement moteur d'un véhicule automobile par rapport à des poutres horizontales parallèles du compartiment moteur du véhicule, lesdites poutres comprenant une poutre inférieure (2) sur laquelle la base (8) du radiateur (1) prend appui verticalement et est positionnée horizontalement, et une poutre supérieure (3) qui est décalée transversalement par rapport à la poutre inférieure (2), des moyens étant prévus pour positionner le sommet (9) du radiateur (1) horizontalement par rapport à la poutre supérieure (3) et pour exercer une pression verticalement vers le bas sur le sommet (9) du radiateur (1) en vue de maintenir la base (8) du radiateur en appui sur la poutre inférieure (2), caractérisé par le fait que lesdits moyens comprennent un ensemble monopièce (10) en fil de ressort, comprenant une première branche (11) et une seconde branche (15) raccordées l'une à l'autre à l'une de leurs extrémités de manière à s'étendre sensiblement perpendiculairement l'une par rapport à l'autre, ledit ensemble (10) étant monté sous tension de manière que ladite première branche (11) s'étende depuis le dessus de ladite poutre supérieure (3) de façon sensiblement horizontale jusqu'au dessus du sommet (9) du radiateur (1), son extrémité libre (12) étant pressée verticalement vers le bas sur le sommet (9) du radiateur (1), et que la seconde branche (15) s'étende depuis le dessus de la poutre supérieure (3) verticalement vers le bas à travers ladite poutre supérieure (3) en étant guidée de façon mobile verticalement dans ladite poutre supérieure (3), l'extrémité libre de la seconde branche (15) comportant des moyens pour sa fixation à une poutre intermédiaire (4) à l'état tendu de l'ensemble (10) de manière à reporter sur la poutre intermédiaire (4) l'effort vertical appliqué par l'extrémité libre (12) de la première branche (11) sur le sommet (9) du radiateur (1).

2. Dispositif suivant la revendication 1, caractérisé par le fait que ledit ensemble monopièce en fil de ressort (10) comprend une boucle de torsion (14) entre les deux branches (11, 15).

3. Dispositif suivant la revendication 1 ou 2, caractérisé par le fait que l'ensemble monopièce en fil de ressort (10) comprend deux parties parallèles (17, 18) dont chacune comprend une première branche (11) et une seconde branche (15), les extrémités libres des deux premières branches (11) étant coudées en forme de crochet (12) et reliées entre elles et les extrémités libres des deux secondes branches (15) étant coudées sous forme de crochets opposés (19, 20) en vue de leur accrochage dans une lumière (21) de la poutre intermédiaire (4).

4. Dispositif suivant l'une quelconque des revendications précédentes, caractérisé par le fait qu'une agrafe de guidage (16) dans laquelle la seconde branche (15) de l'ensemble (10) est guidée verticalement est clipsée dans une ouverture de la poutre supérieure (3).

5. Dispositif suivant l'une quelconque des revendications précédentes, caractérisé par le fait que le radiateur (1) est clipsé par sa base (8) dans une ouverture de la poutre inférieure (2) au moyen d'un pion (5) entouré d'une butée élastique (6) et comporte à son sommet (9) un tampon élastique (13) sur lequel la ou les premières branches (11) prennent appui par leur extrémité libre (12).

**Patentansprüche**

1. Haltevorrichtung für einen Motorkühler eines Kraftfahrzeugs in Bezug auf waagrechte parallele Träger des Motorraums des Fahrzeugs, wobei die genannten Träger einen unteren Träger (2), auf dem sich der Sockel (8) des Kühlers (1) senkrecht abgestützt und waagerecht gehalten ist, sowie einen oberen Träger (3), der gegenüber dem unteren Träger (2) in Querrichtung versetzt ist, umfassen, wobei Mittel vorgesehen sind, um den oberen Teil (9) des Kühlers (1) waagerecht gegenüber dem oberen Träger (3) zu halten und um einen senkrechten Druck nach unten auf den oberen Teil (9) des Kühlers (1) auszuüben, um den Sockel (8) des Kühlers (1) auf den unteren Träger (2) zu drücken, dadurch gekennzeichnet, daß die genannten Mittel eine einstückige Einheit (10) aus Federdraht umfassen, welche einen ersten Zweig (11) und einen zweiten Zweig (15) besitzt, die an einem ihrer Enden so miteinander verbunden sind, daß sie sich im wesentlichen rechtwinklig zueinander erstrecken, wobei die genannte Einheit (10) unter Spannung so eingesetzt wird, daß sich der genannte erste Zweig (11) von der Oberseite des genannten oberen Trägers (3) aus im wesentlichen waagerecht bis über den oberen Teil (9) des Kühlers (1) erstreckt, wobei sein freies Ende (12) senkrecht nach unten auf den oberen Teil (9) des Kühlers (1) gedrückt wird, und daß sich der zweite Zweig (15) von der Oberseite des oberen Trägers (3) aus senkrecht nach unten durch den genannten oberen Träger (3) erstreckt und senkrecht beweglich in dem genannten oberen Träger (3) geführt wird, wobei das freie Ende des zweiten Zweiges (15) Mittel zur Befestigung an einem Zwischenträger (4) im gespannten Zustand der Einheit (10) enthält, so daß der vom freien Ende (12) des ersten Zweigs (11) auf den oberen Teil (9) des Kühlers (1) aufgebrachte Vertikaldruck auf diesen Zwischenträger (4) übertragen wird.

2. Vorrichtung gemäß Anspruch 1, dadurch gekennzeichnet, daß die genannte einstückige Einheit (10) aus Federdraht eine Torsionsschleife (14) zwischen den beiden Zweigen (11, 15) besitzt.

3. Vorrichtung gemäß Anspruch 1 oder 2, dadurch gekennzeichnet, daß die einstückige Einheit (10) aus Federdraht zwei parallele Teile (17, 18) enthält, von denen jeder einen ersten Zweig (11) und einen zweiten Zweig (15) besitzt, wobei die freien Enden der beiden ersten Zweige (11) hakenförmig (12) abgewinkelt sind und miteinander verbunden sind und die beiden freien Enden der beiden zweiten Zweige (15) in Form von gegenüberliegenden Haken (19, 20) abgewinkelt sind um in einem Langloch (21) des Zwischenträgers (4) verankert zu werden.

4. Vorrichtung gemäß einem beliebigen der vorstehenden Ansprüche, dadurch gekennzeichnet, daß eine Führungsklammer (16), in der der zweite Zweig (15) der Einheit (10) senkrecht geführt wird, in eine Öffnung des oberen Trägers (3) eingerastet ist.

5. Vorrichtung gemäß einem beliebigen der vorstehenden Ansprüche, dadurch gekennzeichnet, daß der Kühler (1) mit seinem Sockel (8) mittels eines Stifts (5), der von einem elastischen Widerlager (6) eingefaßt ist, in eine Öffnung des unteren Trägers (22) eingerastet wird und an seinem oberen Ende (9) einen elastischen Puffer (13) besitzt, auf den sich der bzw. die ersten Zweige (11) mit ihren freien Enden (12) abstützen.

## Claims

1. A device for holding a radiator for cooling the motor of a vehicle relative to the parallel horizontal beams of the motor compartment of the vehicle, said beams comprising a lower beam (2) on which the base (8) of the radiator (1) rests vertically and is positioned horizontally, and an upper beam (3) which is transversely offset relative to the lower beam (2), means being provided to position the top (9) of the radiator (1) horizontally relative to the upper beam (3) and to exert a downward vertical pressure on the top (9) of the radiator (1) in order to maintain the base (8) of the radiator against the lower beam (2), characterized in that the said means comprise a monopiece assembly (10) of spring wire comprising a first branch (11) and a second branch (15) connected one to the other at one of their ends in such a manner to extend approximately perpendicularly the one relative to the other, the said assembly (10) being mounted under tension in such a manner that the said first branch (11) extends from the top of the said upper beam (3) approximately horizontally above the top (9) of the radiator (1), its free end (12) being pressed vertically downward on the top (9) of the radiator (1), and that the second branch (15) extends from the top of the upper beam (3) vertically downward through the said upper beam (3) while being guided movable vertically in the said upper beam (3), the free end of the second branch (15) including means for securing it to an intermediate beam (4) in the stressed state of the assembly (10) so as to transfer to the intermediate beam (4) the vertical force applied by the free end (12) of the first branch (11) on the top (9) of the radiator (1).

2. The device according to claim 1, characterized in that the said monopiece assembly of spring wire (10) includes a torsion loop (14) between the two branches (11, 15).

3. The device according to claim 1 or 2, characterized in that the monopiece assembly of spring wire (10) includes two parallel parts (17, 18) each of which comprises a first branch (11) and a second branch (15), the free ends of the two first branches (11) being bent in the form of a hook (12) and connected between them and the free ends of the two second branches (15) being bent in the form of opposing hooks (19, 20) for their attachment into a slot in the intermediate beam (4).

4. The device according to any of the preceding claims, characterized in that a guide clip (16) through which the second branch (15) of the assembly (10) is vertically guided is snapped in an opening of the upper beam (3).

5. The device according to any of the preceding claims, characterized in that the radiator (1) is snapped by its base (8) in an opening in the lower beam (2) by means of a pin (5) surrounded by a resilient foot (6) and has at its top (9) a resilient pad (13) on which the first branch or branches (11) rest with their free end (12).

0 046 566

Fig:1

*Fig. 2*